# FASCICULE DE BREVET EUROPEEN

(11) **EP 3 371 276 B1**
(45) Date de publication et mention de la délivrance du brevet: **08.01.2020**
(21) Numéro de dépôt: 16809479.5
(22) Date de dépôt: 03.11.2016
(51) Int. Cl.: C10J 3/30, C10J 3/38, C10B 47/36, C10B 37/04, C10B 37/02

(54) **DISPOSITIF DE THERMOLYSE A ÉTAGES**
VORRICHTUNG ZUR THERMOLYSE IN PHASEN
DEVICE FOR THERMOLYSIS IN STAGES

(30) Priorité: 04.11.2015 FR 1560555
(43) Date de publication de la demande: 12.09.2018
(73) Titulaire: Haffner Energy, 51300 Vitry Le Francois (FR)
(72) Inventeur: FERNANDEZ DE GRADO, Alain, 51300 Les Rivieres Henruel (FR); HAFFNER, Philippe, 51300 Vitry Le Francois (FR)
(74) Mandataire: Oudin, Stéphane
(86) Numéro de dépôt international: PCT/FR2016/052851
(87) Numéro de publication internationale: WO 2017/077243

(56) Documents cités:
- EP-A1- 2 012 059
- WO-A1-2006/128285
- US-A- 4 137 051

## Description

### Domaine de l'invention

La présente invention appartient au domaine de la production d'énergie par gazéification de matière organique solide ou liquide, cette matière pouvant être issue de la biomasse, de déchets organiques ou de ressources fossiles.

L'invention concerne notamment un dispositif de thermolyse et un procédé de production de gaz de synthèse à partir de matière organique utilisant ledit dispositif.

### Etat de la technique

La gazéification de la matière organique est l'une des voies possibles pour sa valorisation énergétique, les autres voies étant la combustion et la méthanisation.

La matière organique est toujours constituée majoritairement de molécules composées de Carbone C, d'Hydrogène H et d'Oxygène O, éventuellement combinée à de l'eau H2O. Si cette matière organique est soumise à une température de plus de 150°C en défaut d'oxygène, elle subit alors une transformation dite de pyrolyse qui casse les molécules carbonées par rupture des liaisons covalentes. Les produits obtenus lors de cette pyrolyse sont des solides (cendres minérales plus carbone résiduel appelé Char), des vapeurs qui se condensent à température et pression ambiante (goudrons, huiles) et des gaz de synthèse, dit syngaz, qui restent à l'état gazeux à température et pression ambiante (Monoxyde de carbone, Dihydrogène et des éléments gazeux peu valorisables économiquement, comme le Dioxyde de carbone).

Le char produit par la pyrolyse subit aussi une gazéification par association du carbone avec de l'oxygène, ledit oxygène provenant en partie des molécules de la matière organique originelle, et de l'hydrogène ce qui produit du Monoxyde de carbone, du Dihydrogène et du Méthane dans des conditions idéales. Cette réaction est endothermique et exige un apport de chaleur spécifique. Traditionnellement cet apport est assuré par une réaction de combustion à l'air réalisée dans le procédé.

Selon l'état de l'art actuel des procédés de gazéification de matière organique, la production de Syngaz fait appel à principalement deux technologies:
- Dans un procédé à lit fixe de type co-courant ou contre-courant, avec une pyrolyse dite lente, la matière première est introduite dans une enceinte dans laquelle elle subit les étapes de pyrolyse et de gazéification au cours de son déplacement. De l'air est introduit localement dans l'enceinte afin de permettre une combustion partielle du char et de générer l'énergie nécessaire à la gazéification endothermique. Les gaz produits sont extraits soit du côté de l'entrée de la matière première (logique de contre-courant) soit du côté de la sortie des cendres (logique de co-courant).
- Dans un procédé de type lit fluidisé à pyrolyse dite rapide, la matière première est préalablement finement broyée puis introduite dans un réacteur où s'agite une masse de particules très chaudes, par exemple du sable de dolomite. La poudre de matière première subit alors quasi instantanément les étapes de pyrolyse puis de gazéification. Les gaz produits sont collectés en une seule sortie principale placée en position haute. L'étape suivante effectue une séparation des gaz produits avec le sable. Celui-ci est alors recirculé vers le réacteur afin d'être recyclé dans le cas des lits fluidisés circulants.

Ces solutions traditionnelles présentent notamment les défauts suivants:
- Dans le cas du lit fluidisé, la matière première doit être soigneusement calibrée afin de se répartir rapidement dans le lit de sable. A cette fin, une installation complexe de broyage et de calibrage des entrants est requise. Le lit de sable est maintenu dans un état de bouillonnement qui implique une parfaite fluidité du sable, et toute amorce de fusion de cendres au sein du lit de sable compromet fortement l'efficacité du procédé. Pour ces raisons, les procédés à lit fluidisés sont exploités à des températures généralement inférieures à 900°C, et la présence d'alcalins tels que le potassium doit être très limitée. Or une température de 900°C implique d'une part la présence résiduelle d'hydrocarbures polycycliques aromatiques (goudrons) et ne permet pas d'assurer la gazéification totale du char.
- Dans le cas du lit fixe, la matière première descend par gravité alors que les gaz doivent circuler en son sein. Il est alors nécessaire de ne pas introduire de fines ou particules trop petites, typiquement moins de 1mm de diamètre, car cela pourrait bloquer la circulation homogène des gaz dans le lit. La matière première est donc criblée afin de rejeter les fines avant son introduction dans le réacteur de pyrolyse. Quelles que soient les précautions prises, les courants préférentiels sont inévitables avec un risque d'écroulement du lit. Pour ces raisons, les lits fixes à co-courant sont limités à de petites puissances (moins de 2 MW) et les lits fixes à contre-courant ne permettent pas une exploitation du syngaz en moteur ou en turbine pour cause de qualité de gaz insuffisante.
- Dans les 2 cas, la réaction qui a lieu en premier est une pyrolyse car l'énergie requise pour la transformation de la matière première est apportée par une combustion opérée dans le même dispositif afin que la chaleur soit immédiatement disponible. Le défaut d'une telle disposition est que la combustion génère l'apparition d'éléments indésirables comme des Oxydes d'azote qui se trouvent alors mélangés au syngaz au détriment de sa qualité. D'autre part, il n'est pas possible de récupérer l'énergie thermique des gaz sortant de l'équipement afin d'alimenter le procédé de gazéification, ce qui induit une perte de rendement qui dépasse en général 10%.

Le document WO 2006/128285 A1 décrit une cascade de cuves de réacteur de gazéification, dans laquelle la matière première tombe d'un réacteur à l'autre par un trou dans le fond du réacteur supérieur facilité par un disque rotatif ou un mécanisme d'agitation.

D'anciennes solutions, qui ne sont que peu utilisées à ce jour, mettent en œuvre un brassage de matière première dans un tambour fixe ou tournant afin d'assurer une homogénéisation et un avancement des produits depuis une entrée jusqu'à une sortie. Certains accessoires de brassage sont présents dans l'appareil, mais le défaut de ces solutions est qu'aucune action mécanique spécifique n'est prévue au cours du travail en vue de faciliter la libération des vapeurs durant la pyrolyse. En outre, les températures de fonctionnement sont en général inférieures à 600°C, ne permettant pas la production de syngaz de qualité suffisante pour une exploitation dans un moteur ou une turbine.

### Description de l'invention

La présente invention a pour but de pallier les inconvénients de l'état de la technique en proposant un dispositif de thermolyse capable de produire du char et du syngaz de bien meilleure qualité que celle obtenue avec une pyrolyse tout en utilisant une technologie moins onéreuse que les solutions traditionnelles.

Ainsi, la présente invention concerne un dispositif de thermolyse de matière organique comprenant un moyen d'apport d'énergie calorique, à une température comprise entre 80°C et 700°C, apte à réguler la température à l'intérieur d'une enceinte comportant une alimentation en matière première, une sortie de gaz de thermolyse et une sortie des produits solides ou liquides de la réaction de la thermolyse, ladite enceinte encloisonnant au moins un plateau séparant ladite enceinte en une portion supérieure et une portion inférieure et au moins un élément de transfert, remarquable en ce que ledit élément de transfert et/ou le plateau est monté en rotation autour d'un axe, ladite alimentation en matière première est placée au-dessus dudit plateau, définissant un premier point de chute de matière première sur ce dernier, ledit plateau comporte un trou de vidange communiquant entre ladite portion supérieure et ladite portion inférieure et placé angulairement après le premier point de chute de la matière première dans le sens de rotation relative et en ce que ledit élément de transfert s'étend radialement du centre dudit plateau en direction de la paroi de ladite enceinte, au-dessus dudit plateau et en ce que ledit dispositif comprend en outre au moins un élément presseur s'étendant au-dessus dudit plateau, entre le centre dudit plateau et la paroi de ladite enceinte, et en ce que ledit élément presseur définit un entrefer décroissant de l'avant vers l'arrière dudit entrefer.

Dans le cadre de l'invention, les termes « avant » et « arrière » sont définis par rapport au sens de rotation relatif dudit entrefer.

Selon un mode de réalisation préféré de l'invention, ledit dispositif comprend en outre un arbre intérieur sensiblement perpendiculaire audit plateau et dont l'axe longitudinal passe par le centre dudit plateau et associé à au moins un élément de transfert et/ou à au moins un élément presseur, ledit arbre intérieur est monté en rotation autour de son axe longitudinal, et ledit élément de transfert et/ou l'élément presseur s'étendent de l'arbre intérieur en direction de la paroi de ladite enceinte au-dessus dudit plateau.

Selon un mode de réalisation préféré de l'invention, ledit entrefer a une valeur maximale de 30 cm et une valeur minimale de 1 mm.

Selon un mode de réalisation préféré de l'invention, l'élément presseur comprend un moyen d'échappement mécanique.

Selon un mode de réalisation préféré de l'invention, ledit moyen d'échappement mécanique comprend au moins un moyen élastique exerçant son effort de rappel sur ledit élément presseur.

Selon un mode de réalisation préféré de l'invention, ledit moyen élastique est un ressort de course réglable.

Selon un mode de réalisation préféré de l'invention, ledit moyen d'échappement mécanique est un système à translation d'un élément presseur coulissant.

Selon un mode de réalisation préféré de l'invention, ledit système à translation comprend un moyen de réglage de la masse de l'élément presseur coulissant.

Selon un mode de réalisation préféré de l'invention, la distance minimale entre le bord inférieur de l'élément de transfert et le plateau est comprise entre 2 et 400 mm.

Selon un mode de réalisation préféré de l'invention, ledit plateau présente un état de surface rugueux d'une rugosité Ra supérieure à 2 mm.

Selon un mode de réalisation préféré de l'invention, ledit dispositif comprend plusieurs plateaux superposés et en ce que le trou de vidange de chaque plateau est décalé angulairement dans le sens de rotation relative par rapport au trou de vidange du plateau disposé directement au-dessus de lui.

Selon un mode de réalisation préféré de l'invention, ledit moyen d'apport d'énergie calorique est disposé au niveau dudit plateau et/ou de la paroi de l'enceinte.

La présente invention concerne également un procédé de thermolyse de matière organique mettant en œuvre un dispositif selon l'une des revendications précédentes.

### Avantages de l'invention

L'avantage de l'invention est d'abord que la matière première subit, dans une enceinte globalement étanche à l'atmosphère extérieure, une transformation de thermolyse progressive associée à un mécanisme d'effritement de la surface friable de la matière traitée.

Le mécanisme installé permet, de façon efficace et économe en énergie, de décrocher la matière rendue friable en surface, de la réduire en poussière calibrée pour favoriser la vaporisation des gaz et huiles, de transporter le char obtenu vers son point de sortie et de collecter les différents fluides vaporisés vers leurs propres points de sortie. Cette invention permet notamment d'utiliser une matière première de taille grossière ayant une distribution granulométrique large, dont plus de 90% de la masse est constituée d'éléments ayant une taille maximale comprise entre 50 cm et 1 mm.

D'autres caractéristiques et avantages de l'invention ressortiront de la description détaillée suivante des modes de réalisation non limitatifs de l'invention, en référence aux figures annexées, dans lesquelles :
- la figure 1 représente schématiquement le dispositif 1 de thermolyse selon l'invention et son principe général de fonctionnement.
- la figure 2 représente schématiquement le principe général de transfert de matière en cours de traitement.
- la figure 3 représente schématiquement un exemple d'élément presseur avec pivot et ressort utilisé selon une variante de l'invention
- la figure 4 représente schématiquement un exemple d'élément presseur avec coulisse et ressort utilisé selon une variante de l'invention.

### Exposé d'un mode de réalisation

Par convention nous désignerons par le mot thermolyse l'ensemble des étapes de séparation des éléments volatils d'avec les chaînes carbonées (dont l'eau) et la réduction de la longueur de ces chaînes carbonées jusqu'à obtenir du carbone pur, dit char, et des cendres d'un côté et différents gaz de réaction dont des composés volatiles, du dihydrogène, du méthane et du monoxyde de carbone de l'autre côté.

L'invention concerne cette étape de thermolyse qui se caractérise par une séparation des éléments constitutifs de la matière organique traitée sous l'effet d'une température élevée, comprise entre 80°C et 700°C, et en défaut d'agent oxydant tel l'oxygène. Le défaut signifie que la quantité d'oxydant disponible est très inférieure à la quantité requise pour permettre une réaction d'oxydation complète c'est-à-dire une combustion totale stœchiométrique.

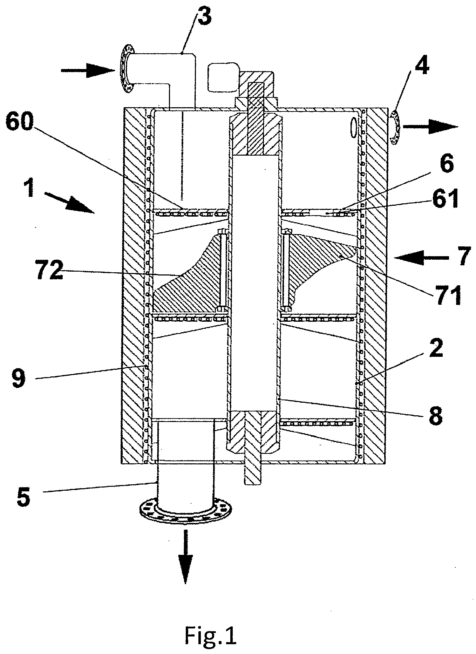

Comme représenté sur la figure 1, la présente invention concerne un dispositif 1 de thermolyse de matière organique constitué d'une enceinte 2, de préférence fixe, de forme cylindrique et disposé selon un axe vertical ou incliné au plus d'un angle de 45° par rapport à la verticale.

Un arbre central 8 tournant autour de son axe longitudinal est placé à l'intérieur de l'enceinte, guidé par tout moyen mécanique traditionnel comme par exemple des roulements assurant la connexion avec l'enceinte 2. Le guidage en rotation de l'arbre 8 est conçu de façon étanche par rapport à l'enceinte 2 afin d'empêcher que de l'air extérieur pénètre dans l'enceinte par cette voie, remettant ainsi en cause la recherche d'un défaut d'oxydant.

Une alimentation 3 de matière première est installée en haut de l'enceinte. Cette alimentation est conçue de façon étanche afin d'empêcher que de l'air extérieur pénètre dans l'enceinte par cette voie, remettant ainsi en cause la recherche d'un manque d'oxydant. Toute solution traditionnelle d'alimentation étanche de matière convient. Par exemple, un système de sas avec deux vannes étanches commandées alternativement permet de délivrer régulièrement dans l'enceinte connectée au sas une quantité de matière définie par le volume du sas. Un autre exemple est obtenu avec l'utilisation d'une trémie et d'une écluse tournante. A chaque rotation de l'écluse, une dose est délivrée dans l'enceinte.

Une sortie 5 des produits solides issus de la transformation de la matière première est installée en bas de l'enceinte. L'étanchéité de cette connexion peut être obtenue par l'usage d'un sas à deux vannes ou d'une vis d'extraction ou toute solution équivalente.

Une sortie 4 des produits vaporisés (gaz et huiles) est installée entre l'entrée 3 et la sortie 5, avantageusement fixée sur l'enceinte extérieure 2. Une variante peut être obtenue en permettant cette sortie de gaz à travers un forage effectué au centre de l'arbre du mécanisme tournant 3. L'étanchéité de cette connexion fixe peut être assurée par l'utilisation de brides étanches.

La sortie 4 est avantageusement connectée à un moyen de soutirage des gaz, par exemple un ventilateur de tirage placé plus loin sur le circuit des gaz. Le vide relatif créé par ce ventilateur de tirage assure que toute fuite éventuelle dans l'enceinte et ses connexions ne se traduit pas par une fuite de gaz vers l'extérieur, mais par une fuite d'air extérieur vers l'intérieur. Ceci est une mesure de sécurité, car il est moins dangereux de faire rentrer de l'air dans l'enceinte que de faire sortir du gaz vers l'atmosphère. Or, cet air apporte de l'oxygène qui perturbe la thermolyse. Il est donc essentiel de soigner l'étanchéité des connexions de l'installation.

Un plateau 6 perpendiculaire à l'axe de l'enceinte est placé à l'intérieur de celle-ci. Ce plateau reçoit par gravité la matière première à traiter, introduite par l'entrée 3, ce qui définit un point de chute 60 sur le plateau 6. La matière est alors entrainée en rotation sur le plateau par l'action d'éléments de transfert 7 portés par l'arbre 8. Ces éléments de transfert ont pour rôle de transférer la matière depuis son point de chute 60 vers un trou de vidange 61 ménagé dans le plateau. De façon préférée, la position angulaire relative entre le point de chute et le trou de vidange est proche de 360° mais légèrement inférieure de façon à éviter que de la matière tombant sur le point de chute du plateau puisse déborder et tomber directement dans le trou de vidange sans avoir fait un tour sur le plateau. L'intérêt du passage sur ce plateau est de maintenir la matière durant plusieurs secondes à plusieurs minutes dans une atmosphère en défaut d'oxygène permettant la thermolyse.

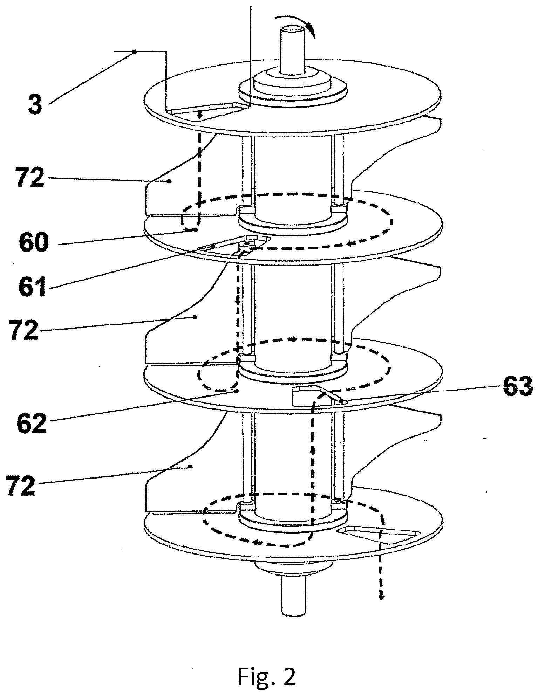

Selon une variante de l'invention, l'utilisation de plusieurs plateaux superposés est avantageuse. Comme indiqué en figure 2, un premier plateau est placé en position supérieure dans l'enceinte, un second plateau est placé sous le premier, par exemple, à une distance verticale comprise entre 30 cm et 120 cm. La matière est alimentée par l'entrée 3, tombe sur le plateau supérieur en un point de chute 60, est mue en rotation par les éléments de transfert 72, quitte le premier plateau par le trou de vidange 61 et tombe sur le second plateau sur un nouveau point de chute 62. La matière est alors entrainée en rotation par les éléments de transfert 72 placés dans ce second étage jusqu'au nouveau trou de vidange 63 qui fait ensuite tomber la matière vers un étage suivant ou vers le point de sortie 5 de l'enceinte.

Les éléments de transfert 7 se présentent avantageusement sous la forme de pales droites ou de soc de charrue fixées sur l'arbre 8.

Selon une variante de l'invention, il y a deux sortes de pales: la pale supérieure 71 agit dans la couche supérieure de la matière placée sur le plateau 6, et la pale inférieure 72 agit sur la couche inférieure, au plus près de la surface du plateau. La combinaison des deux sortes de pale permet de retourner en permanence le lit de matière en cours de thermolyse, afin de faire remonter la matière placée contre le plateau et inversement de faire redescendre la matière placée au-dessus du lit de matière.

Un moyen de chauffage 9 de l'enceinte apporte de l'énergie calorique par le biais d'un fluide caloporteur chauffé par tout moyen annexe au dispositif de l'invention. Par exemple, l'enceinte peut être entourée par un réseau de tube caloporteur dans lequel circule une huile minérale ou un sel fondu à très haute température. Autour de cette nappe de tuyauterie, un habillage de matériau calorifuge permet de limiter les fuites thermiques vers l'extérieur de l'enceinte.

Le plateau peut aussi être équipé d'un réseau de tuyauterie caloporteuse, typiquement en sous-face afin de laisser la face supérieure libre de recevoir la matière première en cours de thermolyse.

Selon une variante de l'invention, le moyen d'apport calorique 9 peut comporter un réseau de chauffage électrique par effet joule qui entoure aussi l'enceinte et/ou qui est positionné sous ou dans l'épaisseur du plateau.

Selon une autre variante de l'invention, le moyen d'apport d'énergie calorique peut être intégré à l'arbre intérieur 8 de telle sorte à chauffer l'enceinte depuis la surface de l'arbre 8, les éléments de transfert 7 et/ou les éléments presseurs 73.

Selon une variante de l'invention, l'enceinte 2 peut être tournante et l'arbre intérieur 8 fixe par rapport au sol, permettant ainsi un mouvement relatif en rotation. Dans cette variante, les connexions de l'enceinte avec les entrées et les sorties des produits sont évidemment plus complexes à réaliser.

Selon l'invention, l'arbre 8 porte aussi des éléments presseurs 73 dont la fonction est d'accélérer la réaction de thermolyse de la matière première en exerçant des efforts d'écrasement sur les particules en cours de thermolyse.

L'avantage de cette action sur la couche supérieure friable des particules thermolysées est que la couche inférieure se trouve ainsi libérée de sa gangue supérieure et peut recevoir librement le flux de chaleur qui règne dans l'enceinte et ainsi libérer plus vite les gaz et vapeurs durant sa réaction de thermolyse. La réaction de thermolyse est ainsi plus rapide qu'en l'absence d'éléments presseurs.

Ces éléments tournent par rapport au plateau 6 et comportent une plaque inférieure 76 inclinée par rapport à la face supérieure du plateau. Cette inclinaison définit un entrefer décroissant entre l'élément presseur et le plateau, l'entrefer maximal 74 est placé à l'avant de l'élément presseur selon le sens d'avancement durant la rotation, et l'entrefer minimal 75 à l'arrière. Ainsi, durant le déplacement de ces éléments, les particules de matière première en cours de thermolyse pénètrent sous la plaque inférieure 76 dans cet entrefer et sont écrasées lors de la rotation.

Selon une variante avantageuse, la face supérieure du plateau présente une rugosité importante, par exemple avec une rugosité Ra de plus de 2 mm, de sorte que la matière qui aurait tendance à être entrainée en rotation par les éléments presseurs 73 soit freinée et pénètre bien dans l'entrefer qui doit l'écraser.

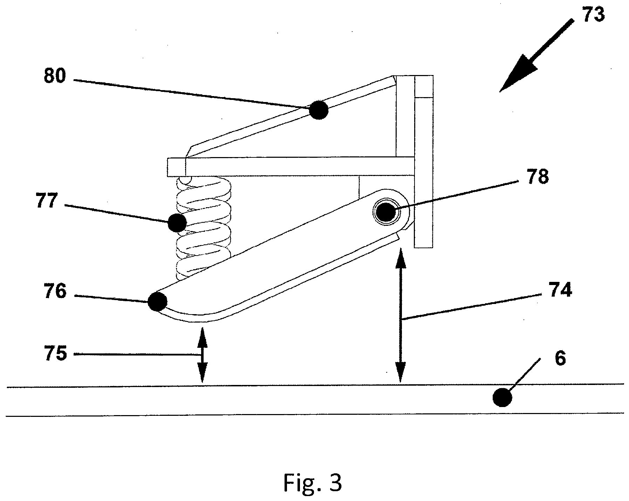

Selon une variante de l'invention, comme indiqué en figure 3, l'élément presseur est équipé d'une liaison pivot 78 entre la potence 80 fixée sur l'arbre 8 et la plaque inférieure 76. De plus un ou plusieurs ressorts 77 sont intercalés entre la potence 80 et la plaque inférieure 76. Cette liberté de mouvement en rotation autorise le soulèvement de la plaque inférieure, si une particule de matière première ne se brise pas en élément de taille inférieure dans l'entrefer minimal 75. Dans ce cas, la particule exerce un effort de soulèvement sur la plaque inférieure qui s'escamote en pivotant autour de son axe 78. Afin de faciliter le retour de la plaque inférieure 76, après échappement de la particule rejetée, il est avantageux d'associer cette dernière à un ressort apte à rabattre la plaque inférieure en position basse.

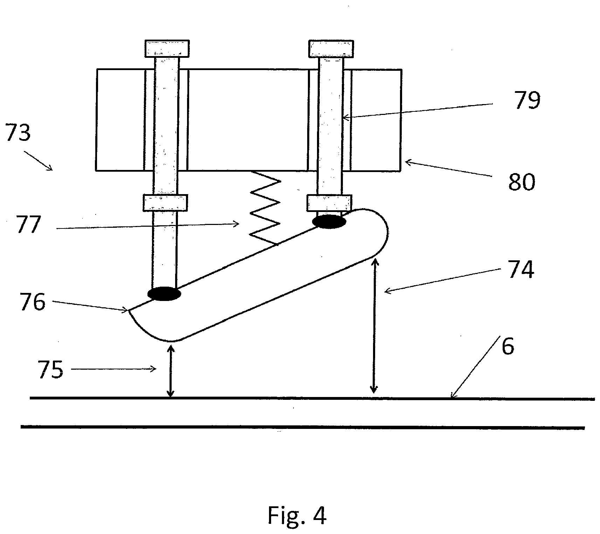

Selon une autre variante de l'invention, comme indiqué en figure 4, l'élément presseur est équipé d'une liaison glissante 79 entre la potence 80 fixée sur l'arbre 8 et la plaque inférieure 76. De plus, avantageusement un ou plusieurs ressorts 77 sont intercalés entre la potence 80 et la plaque inférieure 76. Cette liberté de mouvement en translation autorise le soulèvement de la plaque inférieure si une particule de matière première ne se brise pas en élément de taille inférieure à l'entrefer minimal 75. Dans ce cas, la particule exerce un effort de soulèvement sur la plaque inférieure qui s'escamote en coulissant dans la glissière 79. Après échappement de la particule rejetée, le ressort pousse la plaque inférieure en position normale. L'absence de ressort peut être compensée par l'ajustement de la masse de la plaque inférieure mobile au-delà de 1 kg, de façon à disposer d'un effort presseur d'au moins 10 N.

Selon une variante de l'invention, les ressorts disposent d'une course réglable de façon à adapter la force limite d'escamotage de la plaque inférieure, dans l'application de la loi de raideur d'un ressort.

Selon une variante de l'invention, le ressort peut être un ressort de torsion et non de translation dont l'action sur la plaque est particulièrement adaptée dans le cas de la liaison pivot.

Selon un mode de réalisation avantageux, l'élément de transfert 7 et l'élément presseur 73 peuvent être associés sur un même support s'étendant de l'arbre 8 vers la surface intérieure de l'enceinte 2.

L'invention concerne également un procédé de thermolyse utilisant les moyens et les configurations décrits ci-dessus.

## Revendications

1. Dispositif de thermolyse (1) comprenant un moyen (9) d'apport d'énergie calorique, à une température comprise entre 80°C et 700°C, apte à réguler la température à l'intérieur d'une enceinte (2) comportant une alimentation (3) en matière première, une sortie (4) de gaz de thermolyse et une sortie (5) des produits solides ou liquides de la réaction de la thermolyse, ladite enceinte encloisonnant au moins un plateau (6) séparant ladite enceinte (2) en une portion supérieure et une portion inférieure et au moins un élément de transfert (7), **caractérisé en ce que** ledit élément de transfert (7) et/ou le plateau (6) est monté en rotation autour d'un axe, ladite alimentation en matière première (3) est placée au-dessus dudit plateau, définissant un premier point de chute (60) de matière première sur ce dernier, ledit plateau comporte un trou de vidange (61) communiquant entre ladite portion supérieure et ladite portion inférieure et placé angulairement après le premier point de chute (60) de la matière première dans le sens de rotation relative et **en ce que** ledit élément de transfert (7) s'étend radialement du centre dudit plateau (6) en direction de la paroi de ladite enceinte (2), au-dessus dudit plateau (6) et **en ce que** ledit dispositif (1) comprend en outre au moins un élément presseur (73) s'étendant au-dessus dudit plateau (6), entre le centre dudit plateau (6) et la paroi de ladite enceinte (2), et **en ce que** ledit élément presseur (73) définit un entrefer décroissant de l'avant vers l'arrière dudit entrefer.

2. Dispositif de thermolyse (1) selon la revendication 1 **caractérisé en ce qu'**il comprend en outre un arbre intérieur (8) sensiblement perpendiculaire audit plateau (6) et dont l'axe longitudinal passe par le centre dudit plateau (6) et associé à au moins un élément de transfert (7) et/ou à au moins un élément presseur (73), ledit arbre intérieur (8) est monté en rotation autour de son axe longitudinal, et ledit élément de transfert (7) et/ou l'élément presseur (73) s'étendent de l'arbre intérieur (8) en direction de la paroi de ladite enceinte (2) au-dessus dudit plateau (6).

3. Dispositif (1) selon la revendication précédente, **caractérisé en ce que** ledit entrefer a une valeur maximale de 30cm et une valeur minimale de 1mm.

4. Dispositif (1) selon la revendication 1 à 3, **caractérisé en ce que** l'élément presseur (73) comprend un moyen d'échappement mécanique.

5. Dispositif (1) selon la revendication 4, **caractérisé en ce que** ledit moyen d'échappement mécanique comprend au moins un moyen élastique exerçant son effort de rappel sur ledit élément presseur (73).

6. Dispositif (1) selon la revendication précédente, **caractérisé en ce que** ledit moyen élastique est un ressort de course réglable.

7. Dispositif (1) selon la revendication 4, **caractérisé en ce que** ledit moyen d'échappement mécanique est un système à translation d'un élément presseur (73) coulissant.

8. Dispositif (1) selon la revendication précédente, **caractérisé en ce que** ledit système à translation comprend un moyen de réglage de la masse de l'élément presseur coulissant.

9. Dispositif (1) selon l'une des revendications précédentes, **caractérisé en ce que** la distance minimale entre le bord inférieur de l'élément de transfert (7) et le plateau (6) est comprise entre 2 et 400 mm.

10. Dispositif (1) selon l'une des revendications précédentes, **caractérisé en ce que** ledit plateau présente un état de surface rugueux d'une rugosité Ra supérieure à 2 mm.

11. Dispositif (1) selon l'une des revendications précédentes, **caractérisé en ce qu'**il comprend plusieurs plateaux (6) superposés et **en ce que** le trou de vidange (61) de chaque plateau (6) est décalé angulairement dans le sens de rotation relative par rapport au trou de vidange (61) du plateau (6) disposé directement au-dessus de lui.

12. Dispositif (1) selon l'une des revendications précédentes, **caractérisé** en ce ledit moyen (9) d'apport d'énergie calorique est disposé au niveau dudit plateau (6) et/ou de la paroi de l'enceinte(2).

13. Procédé de thermolyse de matière organique mettant en œuvre un dispositif (1) selon l'une des revendications précédentes.

## Patentansprüche

1. Thermolysevorrichtung (1), die ein Mittel (9) zum Eintragen von Wärmeenergie mit einer Temperatur im Bereich zwischen 80 °C und 700 °C umfasst, welche die Temperatur im Inneren eines Behälters (2) regeln kann, der eine Rohstoffzufuhr (3), einen Auslass (4) für Thermolysegas und einen Auslass (5) für die festen oder flüssigen Produkte der Reaktion der Thermolyse umfasst, wobei der Behälter mindestens eine Platte (6), die den Behälter (2) in einen oberen Abschnitt und einen unteren Abschnitt trennt, und mindestens ein Übertragungselement (7) umschließt, **dadurch gekennzeichnet, dass** das Übertragungselement (7) und/oder die Platte (6) um eine Achse drehbar gelagert ist, wobei die Rohstoffzufuhr (3) über der Platte platziert ist, einen ersten Rohstoff-Fallpunkt (60) diese letztere definierend, wobei die Platte eine Ablauföffnung (61) umfasst, die zwischen dem oberen Abschnitt und dem unteren Abschnitt kommuniziert und winkelmäßig in der relativen Drehrichtung nach dem ersten Fallpunkt (60) des Rohstoffs platziert ist, und dadurch, dass sich das Übertragungselement (7) radial vom Mittelpunkt der Platte (6) in Richtung der Wand des Behälters (2) über der Platte (6) erstreckt, und dadurch, dass die Vorrichtung (1) weiter mindestens ein Druckelement (73) umfasst, das sich über der Platte (6) zwischen dem Mittelpunkt der Platte (6) und der Wand des Behälters (2) erstreckt, und dadurch, dass das Druckelement (73) einen Spalt definiert, der von der Vorderseite zur Hinterseite des Spalts hin abnimmt.

2. Thermolysevorrichtung (1) nach Anspruch 1, **dadurch gekennzeichnet, dass** sie weiter eine Innenwelle (8) umfasst, die im Wesentlichen zur Platte (6) senkrecht ist und deren Längsachse durch den Mittelpunkt der Platte (6) verläuft, und die mit mindestens einem Übertragungselement (7) und/oder mit mindestens einem Druckelement (73) verknüpft ist, wobei die Innenwelle (8) um ihre Längsachse drehbar gelagert ist und sich das Übertragungselement (7) und/oder das Druckelement (73) von der Innenwelle (8) in Richtung der Wand des Behälters (2) über der Platte (6) erstrecken.

3. Vorrichtung (1) nach dem vorstehenden Anspruch, **dadurch gekennzeichnet, dass** der Spalt einen maximalen Wert von 30 cm und einen minimalen Wert von 1 mm aufweist.

4. Vorrichtung (1) nach Anspruch 1 bis 3, **dadurch gekennzeichnet, dass** das Druckelement (73) ein mechanisches Auspuffmittel umfasst.

5. Vorrichtung (1) nach Anspruch 4, **dadurch gekennzeichnet, dass** das mechanische Auspuffmittel mindestens ein elastisches Mittel umfasst, das seine Rückstellkraft auf das Druckelement (73) ausübt.

6. Vorrichtung (1) nach dem vorstehenden Anspruch, **dadurch gekennzeichnet, dass** das elastische Mittel eine einstellbare Hubfeder ist.

7. Vorrichtung (1) nach Anspruch 4, **dadurch gekennzeichnet, dass** das mechanische Auspuffmittel ein System mit Translation eines verschiebbaren Druckelements (73) ist.

8. Vorrichtung (1) nach dem vorstehenden Anspruch, **dadurch gekennzeichnet, dass** das Translationssystem ein Mittel zum Einstellen der Masse des verschiebbaren Druckelements umfasst.

9. Vorrichtung (1) nach einem der vorstehenden Ansprüche, **dadurch gekennzeichnet, dass** der minimale Abstand zwischen der unteren Kante des Übertragungselements (7) und der Platte (6) im Bereich zwischen 2 und 400 mm liegt.

10. Vorrichtung (1) nach einem der vorstehenden Ansprüche, **dadurch gekennzeichnet, dass** die Platte einen rauen Oberflächenzustand mit einer Rauheit Ra von größer als 2 mm aufweist.

11. Vorrichtung (1) nach einem der vorstehenden Ansprüche, **dadurch gekennzeichnet, dass** sie mehrere übereinanderliegende Platten (6) umfasst, und dadurch, dass die Ablauföffnung (61) jeder Platte (6) winkelmäßig in der relativen Drehrichtung in Bezug auf die Ablauföffnung (61) der direkt über ihr angeordneten Platte (6) versetzt ist.

12. Vorrichtung (1) nach einem der vorstehenden Ansprüche, **dadurch gekennzeichnet**, das Mittel (9) zum Eintragen von Wärmeenergie im Bereich der Platte (6) und/oder der Wand des Behälters (2) angeordnet ist.

13. Verfahren zur Thermolyse von organischem Material, das eine Vorrichtung (1) nach einem der vorstehenden Ansprüche einsetzt.

## Claims

1. A device for thermolysis (1) comprising means (9) of thermal energy input, at a temperature between 80°C and 700°C, capable of regulating the temperature inside a chamber (2) having a supply (3) of raw material, an outlet (4) of gas thermolysis and an outlet (5) of solid or liquid products of the reaction from the thermolysis, said chamber enclosing at least one tray (6) separating said chamber (2) into an upper portion and a lower portion and at least one transfer member (7), **characterized in that** said transfer member (7) and/or the tray (6) is rotatably mounted around an axis, said raw material supply (3) is placed over said tray, defining a first drop point (60) of raw material thereon, said tray comprises a drain hole (61) communicating between said upper portion and said bottom portion and arranged angularly after the first drop point (60) of the raw material in the direction of relative rotation and **in that** said transfer member (7) extends radially from the centre of said tray (6) towards the wall of said chamber (2) above said tray (6) and **in that** said device (1) further comprises at least one presser member (73) extending above said tray (6) between the centre of said tray (6) and the wall of said chamber (2), and **in that** said presser member (73) defines an air gap decreasing from the front to the rear of said air gap.

2. A device for thermolysis (1) according to claim 1 **characterized in that** it further comprises an inner shaft (8) substantially perpendicular to said tray (6) and the longitudinal axis of which passes through the centre of said tray (6) and associated with at least one transfer member (7) and/or at least one presser member (73), said inner shaft (8) is rotatably mounted about the longitudinal axis thereof, and said transfer member (7) and/or the presser member (73) extend from the inner shaft (8) towards the wall of said chamber (2) above said tray (6).

3. A device (1) according to the preceding claim, **characterized in that** said air gap has a maximum value of 30cm and a minimum value of 1 mm.

4. A device (1) according to claim 1 to 3, **characterized in that** the presser member (73) comprises a mechanical exhaust means.

5. A device (1) according to claim 4, **characterized in that** said mechanical exhaust means comprises at least one elastic means exerting a return force on said presser member (73).

6. A device (1) according to the preceding claim, **characterized in that** said resilient means is an adjustable stroke spring.

7. A device (1) according to claim 4, **characterized in that** said mechanical exhaust means is a translation system of a slidable presser member (73).

8. A device (1) according to the preceding claim, **characterized in that** said translation system comprises a means for adjusting the mass of the slidable presser member.

9. A device (1) according to one of the preceding claims, **characterized in that** the minimum distance between the lower edge of the transfer member (7) and the tray (6) is between 2 and 400 mm.

10. A device (1) according to one of the preceding claims, **characterized in that** said tray has a surface roughness Ra greater than 2 mm.

11. A device (1) according to one of the preceding claims, **characterized in that** it comprises a plurality of superposed trays (6) and **in that** the drain hole (61) of each tray (6) is offset angularly in the direction of relative rotation with respect to the drain hole (61) of the tray (6) arranged directly above it.

12. A device (1) according to one of the preceding claims, **characterized in that** said means (9) of providing thermal energy is arranged in said tray (6) and/or the wall of the chamber (2).

13. A method of organic matter thermolysis implementing a device (1) according to one of the preceding claims.
